# EUROPÄISCHE PATENTSCHRIFT

(11) **EP 2 641 129 B1**
(45) Veröffentlichungstag und Bekanntmachung des Hinweises auf die Patenterteilung: **16.05.2018**
(21) Anmeldenummer: 11791492.9
(22) Anmeldetag: 16.11.2011
(51) Int. Cl.: G02F 1/35

(54) **VERFAHREN UND ANORDNUNG ZUR REIN OPTISCHEN MANIPULATION VON OPTISCHEN IMPULSEN**
METHOD AND ARRANGEMENT FOR ALL-OPTICAL MANIPULATION OF OPTICAL PULSES
MÉTHODE ET ARRANGEMENT POUR LA MANIPULATION TOUT OPTIQUE DES IMPULSIONS OPTIQUES

(30) Priorität: 16.11.2010 DE 102010052085
(43) Veröffentlichungstag der Anmeldung: 25.09.2013
(73) Patentinhaber: Demircan, Ayhan, 10115 Berlin (DE)
(72) Erfinder: Demircan, Ayhan, 10115 Berlin (DE)
(74) Vertreter: Gulde & Partner
(86) Internationale Anmeldenummer: PCT/EP2011/070277
(87) Internationale Veröffentlichungsnummer: WO 2012/066050

(56) Entgegenhaltungen:
- NISHIZAWA N ET AL: "Pulse trapping by ultrashort soliton pulses in optical fibers across zero-dispersion wavelength", OPTICS LETTERS OPT. SOC. AMERICA USA, Bd. 27, Nr. 3, 1. Februar 2002 (2002-02-01), Seiten 152-154, XP002667887, ISSN: 0146-9592
- NORIHIKO NISHIZAWA: "Highly functional optical control using ultrafast nonlinear optical effects induced by ultrashort pulse", PROCEEDINGS OF SPIE, Bd. 6783, 2. November 2007 (2007-11-02), Seiten 67832O-1-67832O-8, XP55017405, ISSN: 0277-786X, DOI: 10.1117/12.752615
- MAN W S ET AL: "ALL-OPTICAL ROUTING SWITCH USING A FIBER NONLINEAR DIRECTIONAL COUPLER AND CONTROLLING SOLITONS", JOURNAL OF LIGHTWAVE TECHNOLOGY, IEEE SERVICE CENTER, NEW YORK, NY, US, Bd. 14, Nr. 12, 1. Dezember 1996 (1996-12-01), Seiten 2793-2798, XP000642269, ISSN: 0733-8724, DOI: 10.1109/50.545799
- Norihiko Nishizawa ET AL: "Characteristics of pulse trapping by ultrashort soliton pulse in optical fibers across zerodispersion wavelength", Optics Express, vol. 10, no. 21, 21 October 2002 (2002-10-21), page 1151, XP055246438, ISSN: 2161-2072, DOI: 10.1364/OE.10.001151
- LUCA TARTARA: "Soliton control by a weak dispersive pulse", JOURNAL OF THE OPTICAL SOCIETY OF AMERICA - B., vol. 32, no. 3, 1 March 2015 (2015-03-01), page 395, XP055246443, US ISSN: 0740-3224, DOI: 10.1364/JOSAB.32.000395
- M. AZHAR ET AL: "Raman-free nonlinear optical effects in high pressure gas-filled hollow core PCF", OPTICS EXPRESS, vol. 21, no. 4, 25 February 2013 (2013-02-25), page 4405, XP055246506, ISSN: 2161-2072, DOI: 10.1364/OE.21.004405
- A. V. Gorbach ET AL: "Bouncing of a dispersive pulse on an accelerating soliton and stepwise frequency conversion in optical fibers", OPTICS EXPRESS, vol. 15, no. 22, 29 October 2007 (2007-10-29), pages 14560-14565, XP055316363, DOI: 10.1364/OE.15.014560
- Sh. Amiranashvili ET AL: "Hamiltonian structure of propagation equations for ultrashort optical pulses", Physical Review A (Atomic, Molecular, and Optical Physics), vol. 82, no. 1, 1 July 2010 (2010-07-01), XP055316327, USA ISSN: 1050-2947, DOI: 10.1103/PhysRevA.82.013812
- Sh. Amiranashvili ET AL: "Ultrashort Optical Pulse Propagation in terms of Analytic Signal", Advances in Optical Technologies, vol. 40, no. 11, 1 January 2011 (2011-01-01), pages 1087-8, XP055316323, ISSN: 1687-6393, DOI: 10.1364/OPEX.12.000124
- A. Demircan ET AL: "Controlling Light by Light with an Optical Event Horizon", Physical Review Letters, vol. 106, no. 16, 18 April 2011 (2011-04-18), pages 163901-1, XP055246535, US ISSN: 0031-9007, DOI: 10.1103/PhysRevLett.106.163901

## Beschreibung

### Angaben zum technischen Gebiet:

Die vorliegende Erfindung betrifft die nichtlineare Wellenleiteroptik im Allgemeinen und optische Schalter und optische Transistoren im Speziellen. Anwendungsgebiete liegen beispielsweise in der Vermittlung und Verstärkung von optischen Signalen in optischen Kommunikationssystemen und der Rechentechnik sowie in anderen Gebieten, in denen rein optisches Schalten, Verstärken und Kontrollieren von optischen Impulsen benötigt wird.

Des Weiteren liegt der Anwendungsbereich in der Erzeugung ultrakurzer Impulse mit hoher Intensität sowie in der abstimmbaren effizienten Wellenlängenkonversion.

### Bekannter Stand der Technik:

Die Verwendung von kurzen optischen Impulsen findet sich in einer Vielzahl von unterschiedlichen technischen Bereichen, wie z.B. in der optischen Datenverarbeitung, in optischen Netzwerken, der Laserchirurgie, der Materialverarbeitung, der Spektroskopie oder der Rechentechnik.

Mit unterschiedlichen Lasern lässt sich eine große Bandbreite an Frequenzen, Impulsdauern oder Intensitäten erzeugen, jedoch sind die einzelnen Laser nicht sehr flexibel. Bestimmte Frequenzen oder sehr kurze Impulsdauern sind schwer zu realisieren, bzw. nicht durch einen Laser direkt zu erreichen. Dadurch wird eine externe Manipulation des Laserstrahls erforderlich. Verfahren und Vorrichtungen, mit deren Hilfe optische Signale in gewünschter Weise geformt oder verformt werden können, spielen deshalb in der Optoelektronik und Lasertechnik eine wesentliche Rolle.

Die rasante Entwicklung in der optischen Datenverarbeitung und der Rechentechnik erfordert es zudem, dass die Verarbeitung optischer Impulse auf rein optischen Mechanismen beruht, was im Sinne dieser Erfindung bedeutet, dass keine Umwandlung optischer Signale in elektrische Signale benötigt wird. Entsprechend besteht ein Bedarf an einem rein optischen Analogon eines Transistors.

Ein herkömmlicher Transistor entspricht einem elektronischen Bauelement zum Schalten und Verstärken von elektrischen Signalen. Dabei sorgt ein erster elektrischer Strom dafür, dass ein zweiter Strom fließt oder nicht. In der Informationstechnologie können dadurch elektrische Impulse mit zwei unterschiedlichen Zuständen bereitgestellt werden, die jeweils "0" oder "1" darstellen, wie es für binäres Rechnen benötigt wird.

Auf dem Gebiet der Optik sollten Transistoren jedoch über eine Funktion logischer Operation hinausgehen, welche in optischen Chips oder optischen Rechnern Verwendung finden.

Eine rein optisch abstimmbare Kontrolle solcher Charakteristiken wie Form, Intensität, zeitliche Breite und Frequenz eines optischen Impulses (Signalimpuls) ist dabei von besonderem Interesse. Es wäre wünschenswert, durch eine kontinuierliche Änderung der Charakteristiken eines zweiten optischen Impulses (Kontrollimpuls) eine kontinuierliche Änderung des Signalimpulses herbeizuführen.

Neben rein optischen Transistoreigenschaften ist sowohl die Erzeugung von neuen Laserfrequenzen von besonderem Interesse als auch die Möglichkeit, optische Pulse in ihrer zeitlichen Dauer zu komprimieren.

Da Lichtimpulse nicht direkt miteinander wechselwirken, muss eine Kopplung zwischen den Impulsen über ein nichtlineares Medium oder ein anderes optisches Bauelement hergestellt werden.

Verwendet man ein kubisch nichtlineares Medium, wie z.B. eine optische Faser, wird die Wechselwirkung zweier optischer Impulse über die Kreuzphasenmodulation ("Cross Phase Modulation", XPM) beschrieben. Die Intensitätsabhängigkeit des Brechungsindex ist dabei maßgeblich. Die Änderung des Brechungsindex durch einen optischen Impuls bewirkt eine Änderung des Propagationsverhaltens eines zweiten optischen Impulses.

Üblicherweise wird dabei eine induzierte Phasenverschiebung oder eine Polarisationsdrehung ausgenutzt, die von einem stärkeren optischen Impuls auf einen schwächeren optischen Impuls induziert wird.

Die Wechselwirkung zwischen zwei optischen Impulsen durch diese Standard XPM ist relativ schwach. Eine effiziente Ausnutzung wird durch den "walk-off" Effekt (kurze Wechselwirkungslänge) zusätzlich erheblich eingeschränkt, und eine höhere Sensibilität gegenüber einer Wechselwirkung ist erforderlich.

Man unterscheidet grundsätzlich zwischen resonanter und nichtresonanter Anregung.

Nichtresonante Anregungen besitzen zwar den Vorteil, eine schnelle Wechselwirkung zu bewirken, sind aber im Prinzip zu schwach und werden als zu ineffizient betrachtet, um die gewünschten Transistoreigenschaften zu gewährleisten.

Resonante Anregungen bieten eine hohe Effizienz wegen ihrer Sensibilität in der Nähe der Resonanzfrequenz, benötigen aber höhere Schaltzeiten.

Die US 3,813,605 beschreibt ein Gerät, welches es gestattet, den Zustand der Sättigung des Absorptionskoeffizienten als auch die Abhängigkeit des Brechungsindex des Mediums, das sich zwischen Spiegeln befindet, zu erreichen. Die Eigenschaften des Mediums werden durch die optische Aufpumpstrahlung gesteuert, die auch zu einer Verstärkung führen kann, wenn das Fabry-Perot-Interferometer Resonanzeigenschaften aufweist.

Weitere Beispiele für die Verwendung von nichtlinearen optischen Effekten zum rein optischen Schalten mittels resonanter Anregung werden in der US 6,049,642 und US 6,295,402 beschrieben. Hier wird eine Frequenzverschiebung aufgrund einer Änderung des Brechungsindex ausgenutzt, welche auftritt, wenn ein Kontrollimpuls vom nichtlinearen Medium bei der Resonanzfrequenz absorbiert oder verstärkt wird.

Die Veröffentlichungen "Pulse trapping by ultrashort soliton pulses in optical fibers across zero-dispersion wavelength", Opt. Lett. 27, 152-154 (2002) und "Characteristics of pulse trapping by use of ultrashort soliton pulses in optical fibers across the zero-dispersion wavelength", Opt. Express 10, 1151 (2002) beschreiben ein Verfahren zur Manipulation von optischen Impulsen, wobei zwischen den Impulsen eine Wechselwirkung induziert wird. In eine optische Faser werden ein Soliton und eine dispersive Welle, zeitlich verzögert, eingekoppelt. Die dispersive Welle entspricht dem Signalimpuls, der im Gegensatz zu dem Soliton, der den Kontrollimpuls darstellt, erheblich schwächer ist und sich somit über relativ schwache Wechselwirkungen manipulieren lässt. Die grundlegende Wechselwirkung zwischen zwei optischen Impulsen ist wie oben beschrieben über die XPM gegeben, die dazu genutzt wird die Eigenschaften des Kontrollimpulses auf das Signal zu übertragen. Das Soliton unterliegt in der Faser einer Frequenzverschiebung verursacht über die Ramanstreuung. Es wird beschrieben, dass die schwache dispersive Welle durch das Soliton eingefangen wird und ihre Frequenz sich dementsprechend mit der Frequenz des Soliton ändert.

In der Veröffentlichung "Bouncing of a dispersive pulse on an accelerating soliton and stepwise frequency conversion in optical fibers", Opt. Express 15, 14560 (2007) werden dieselben Verfahrensschritte wie bei den beiden vorab genannten Veröffentlichungen zugrunde gelegt.

Über den Raman-Effekt kommt es zu einer negativen Beschleunigung des Solitons. Wird anschließend eine an dessen Gruppengeschwindigkeit angepasste, jedoch leicht schnellere dispersive Welle mit einer positiven zeitlichen Verzögerung in die Faser eingekoppelt, so induziert dies einen direkten Kollisionsprozess mit der Hinterflanke des vorauslaufenden Solitons. Die bei den genannten Verfahren zu beobachtende Dynamik resultiert dabei in eine Kaskade von inelastischen Reflexions- bzw. Stoßprozessen.

Der Erfindung zugrunde liegendes Problem:
Da Lichtimpulse nicht miteinander wechselwirken, muss eine Kontrolle und Manipulation von Lichtimpulsen durch Lichtimpulse über eine gemeinsame Wechselwirkung über ein Medium ermöglicht werden. Um nichtlineare Prozesse in einem Medium ausnutzten zu können, ist es erforderlich, sehr hohe Intensitäten für die optischen Impulse zu verwenden, was jedoch nur zu einer schwachen Wechselwirkung führt. Es ist bisher kein Wechselwirkungsmechanismus zwischen optischen Impulsen in optischen Medien bekannt, welches stark genug ist, um einen Lichtimpuls auf eine so effiziente Art und Weise zu kontrollieren, wie es vergleichbar für Elektronen möglich ist. Insbesondere ist kein direkter Wechselwirkungsmechanismus bekannt, der es erlaubt, einen optischen Impuls durch einen erheblich schwächeren optischen Impuls entscheidend zu manipulieren.

Es gibt seit mehr als 20 Jahren unterschiedliche Vorschläge für optische Transistoren, die auf verschiedenen physikalischen Mechanismen beruhen. Jedoch konnten die bisher vorgeschlagenen Mechanismen die Anforderung an einen optischen Transistor, insbesondere im Fall der Informationstechnologie, nicht im gewünschten Maße erfüllen.

Es müssen hauptsächlich vier Kriterien erfüllt sein:
1) Hintereinanderschaltbarkeit: Ausgang einer Stufe muss als Eingang für eine folgende Stufe verwendbar sein, d.h. Eingangs- und Ausgangsimpuls, Wellenlängen und Formen sollten kompatibel sein.
2) Ausgangsbelastbarkeit (Fan-Out): Der Ausgang einer Stufe muss ausreichen, um mindestens zwei folgende zu treiben. Eine kleine Änderung der Eingangsleistung sollte zu einer starken Änderung der Ausgangsleistung führen. Insbesondere sollte ein schwacher Kontrollimpuls einen starken Signalimpuls vollständig kontrollieren können.
3) Wiederherstellung des logischen Zustands: Die Qualität eines Signals soll wieder hergestellt werden können, so dass Signalqualitätsverluste nicht durch das System propagieren.
4) Input/Output Isolation: Klare Trennung zwischen Eingangs- und Ausgangsimpulsen.

Methoden, die auf resonante Anregungen basieren, weisen zudem nur eine geringe Flexibilität auf und können nicht für mehrere Zwecke verwendet werden. Die möglichen Frequenzen der optischen Impulse sind meistens fixiert und die benötigten Schaltzeiten relativ hoch.

Viele der vorgeschlagenen Methoden zielen auch hauptsächlich nur darauf hin, ein optisches Schalten zu ermöglichen. Entscheidende grundlegende Eigenschaften optischer Impulse sind die Peakintensität, zeitliche Impulsdauer und die Zentralfrequenz.

In den zuvor erläuterten Pulskomprimierungsmethoden besteht hauptsächlich die Variabilität bzw. Kontrolle des Ausgangssignalimpulses in den Änderungen der Pulsbreite oder Peakleistung des Eingangssignalimpulses. Ein optisches Bauelement, welches eine abstimmbare Pulskomprimierung direkt über die Abstimmung eines viel schwächeren optischen Impulses erlaubt, ist bisher nicht bekannt.

Ebenso ist eine direkte abstimmbare Änderung der Zentralfrequenz eines Impulses oder die abstimmbarere Konvertierung der Wellenlänge ohne Energieverlust aus Mangel an einer starken Licht-Licht Wechselwirkung nicht ohne weiteres möglich.

Problemlösung und Verbesserung des bekannten Standes der Technik:
Der Erfindung liegt die Aufgabe zugrunde, ein Verfahren und eine Anordnung zur rein optischen Manipulation von optischen Impulsen zu schaffen, welche es erlauben, mit einfachen Mitteln Eigenschaften eines Lichtimpulses durch Wechselwirkung mit einem zweiten Lichtimpuls zu kontrollieren und zu manipulieren.

Es ist weiterhin Aufgabe der Erfindung, die Verwendung der Anordnung als rein optischer Transistor oder Schalter sowie als Pulskompressor, als Frequenzkonverter und zur Erzeugung von Superkontinua zu ermöglichen.

Diese Aufgabe wird gelöst durch die Merkmale in den Hauptansprüchen 1 und 6. Zweckmäßige Ausgestaltungen der Erfindung sind in den Unteransprüchen enthalten.

Ein besonderer Vorteil der Erfindung besteht in der gezielten Veränderung der Impulse, wie im Anspruch 1 ausgeführt.

Die erfindungsgemäße Anordnung zur rein optischen Manipulation von optischen Impulsen mit einem dispersiven nichtlinearen optischen Wellenleiter ist im Anspruch 6 beschrieben.

Der Kern der Erfindung besteht also darin, dass in einem dispersiven nichtlinearen optischen Material, wie z.B. einer optischen Faser einer photonischen Kristallfaser oder eines SOI ('Silicon on Insulator')-Wellenleiters, eine verstärkte nichtlineare Wechselwirkung zwischen zwei optischen Impulsen induziert wird. Sie ist vergleichbar mit einem elastischen Stoß und führt zu einem Impuls- und Energieübertrag zwischen den optischen Impulsen. Dieses spiegelt sich in einer gegenseitigen Frequenzverschiebung der Impulse wider, die mit Hilfe geeigneter Dispersionseigenschaften des Materials ausgenutzt wird, um den Impuls in gewünschtem Maße zu verändern.

Der hauptsächliche, dieser Erfindung zugrunde liegende, physikalische Mechanismus ist eine Soliton-Strahlung Wechselwirkung, bei der Strahlung an einem Soliton reflektiert wird.

Numerische Simulationen zeigen nun, das dieser Effekt einer starken Licht-Licht-Wechselwirkung entspricht, die in der Lage ist, nicht nur Änderungen für die Strahlung zu induzieren, sondern auch die Charakteristiken des Solitons entscheidend verändern kann. Diese Wechselwirkung entspricht einem nichtresonanten, nichtlinearen Mechanismus, der durch eine verstärkte Kreuzphasenmodulation hervorgerufen wird. In Kombination mit geeigneten Materialeigenschafen kann sie derart ausgenutzt werden, dass ein Lichtimpuls einen anderen in einer sehr effektiven Weise kontrolliert.

Die mit der Erfindung erzielten Vorteile werden in einem Vergleich der Wirkungsweise nach den vorstehend beschriebenen Hauptkriterien 1) bis 4) deutlich. Alle vier Hauptkriterien können mit Hilfe der Erfindung zum ersten Mal erfüllt werden:
1) Hintereinanderschaltbarkeit:
   Ein- und Ausgangssignalimpulse sind Solitonen, so dass der Ausgangsimpuls wieder als ein Eingangsimpuls verwendet werden kann.
2) Fan-out:
   Es können Ausgangsimpulse erzeugt werden, deren Spitzenleistungen erheblich über dem der Eingangsimpulse liegen.
3) Wiederherstellen des logischen Zustandes:
   Solitonen entsprechen stabilen Lösungen in der Faser. Koppelt man eine Impulsform ein, die in der Nähe der Solitonform bei den vorgegebenen Parametern liegt, stellt sich während der Propagation eine Solitonlösung ein. Der Einfluss des Kontrollimpulses wirkt dabei zusätzlich in gleicher Weise, da der Signalimpuls zum Ausgang hin auf eine Solitonlösung geschoben wird.
4) Input/Output Isolation:
   Kontrollimpuls und Signalimpuls besitzen unterschiedliche Wellenlängen und können leicht voneinander isoliert werden.

Weitere Vorteile im Vergleich zu anderen bisher vorgeschlagenen optischen Schaltern oder optischen Transistoren, die auf Kreuzphasenmodulationen beruhen, liegen darin, dass hier Bedingungen generiert werden, die eine Ausnutzung einer nichtresonanten Wechselwirkung ermöglichen. Das führt auch dazu, dass diese direkte nichtresonante Wechselwirkung erheblich schnellere Schaltzeiten ermöglicht. Es besteht zudem keine Einschränkung auf feste Frequenzen, die in der Nähe einer Resonanzfrequenz liegen müssen, wie z.B. in Fabry-Perot Resonatoren oder dem Mach-Zehder Interferometer. Mit demselben nichtlinearen Medium können mehrere Frequenzkombinationen für die Eingangsimpulse gewählt werden.

Mithilfe des Mechanismus, der dieser Erfindung zugrunde liegt, kann zudem sowohl ein abstimmbarer Pulskompressor, als auch ein effizienter abstimmbarer Wellenlängenkonverter bereitgestellt werden.

Beschreibung der Erfindung:
Die Erfindung soll nachfolgend an Hand von zumindest teilweise in den Figuren dargestellten Ausführungsformen näher beschrieben werden.

Es zeigen:
- Fig. 1: ein Blockdiagram zur Illustration der Konfiguration eines optischen Transistors mit Frequenzfilter,
- Fig. 2: ein Beispiel für ein Dispersionsprofil eines nichtlinearen Wellenleiters mit dem entsprechenden Gruppengeschwindigkeitsprofil,
- Fig. 2a: die Verschiebungen auf den Kurven gemäß Fig. 2,
- Fig. 3: die logischen Zustände "0" und "1" als mögliche Solitonen der Ausgangssignale,
- Fig. 4: Signal-Eingangsimpuls und Signal-Ausgangsimpulse für unterschiedliche Kontrollimpulsbreiten,
- Fig. 5: Signal-Eingangsimpuls und Signal-Ausgangsimpulse für unterschiedliche Kontrollimpulsamplituden,
- Fig.6: ein Blockdiagram zur Illustration der Konfiguration eines optischen Schalters mit einem spektralen Filter,
- Fig. 7: ein Beispiel für ein Dispersionsprofil einer kommerziell erhältlichen Mikrostrukturfaser mit dem entsprechenden Gruppengeschwindigkeitsprofil, welches als optischer Schalter verwendet werden kann,
- Fig. 8: ein Beispiel für ein Dispersionsprofil eines SOI-Wellenleiters, das die Verwendung von Solitonen mit Impulsbreiten von einigen hundert Femtosekunden erlaubt.

### Beispiel 1: optischer Transistor

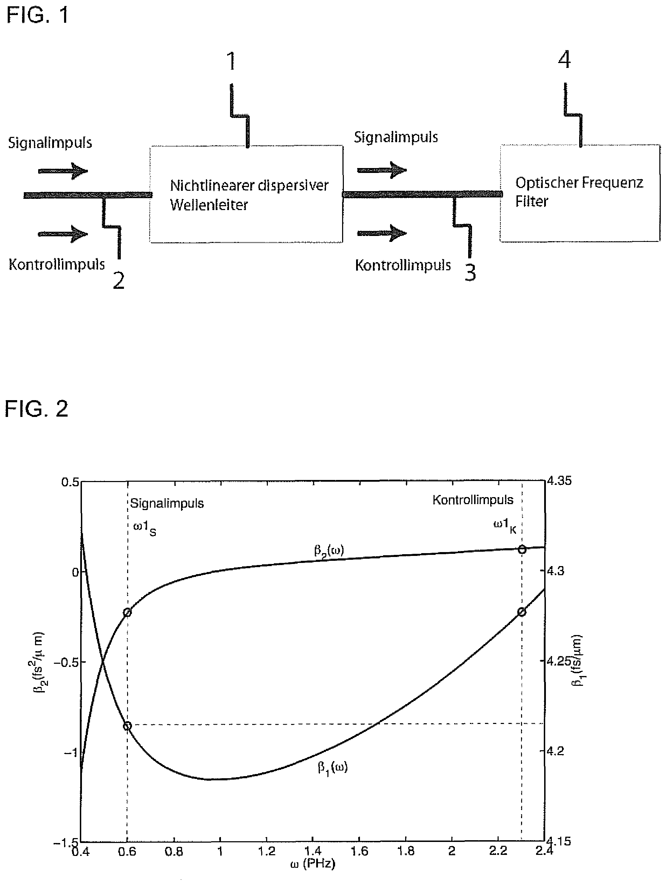

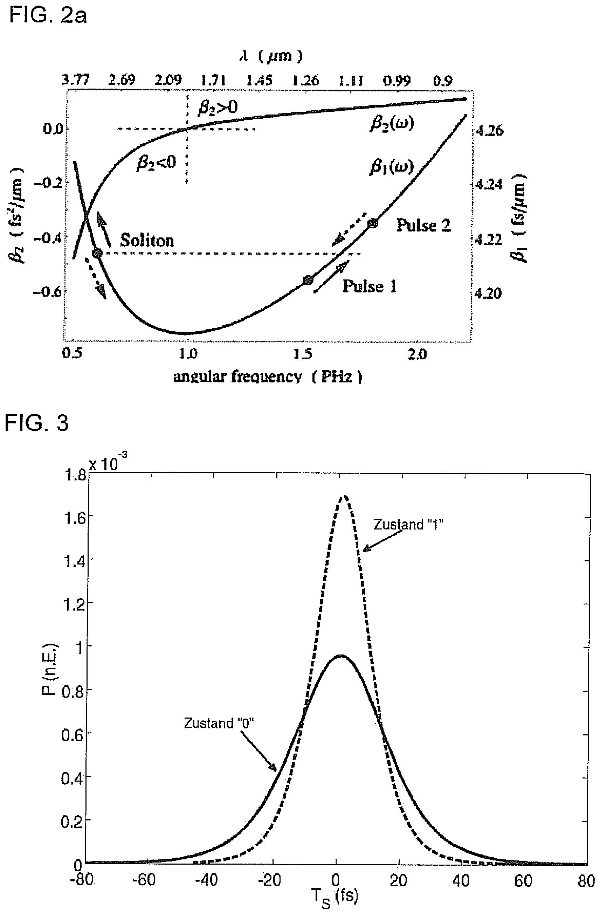

Das in Fig. 1 dargestellte Ausführungsprinzip eines optischen Transistors enthält ein als nichtlinearer Wellenleiter 1 ausgebildetes nichtlineares dispersives Medium, in das über einen Impulseingang 2 ein Signalimpuls mit der Frequenz ω1_{S} und ein Kontrollimpuls mit der Frequenz ω1_{K} eingekoppelt werden. Das Dispersionsprofil des Mediums des Wellenleiters 1 muss mindestens eine Nullstelle aufweisen. Ein Beispiel für ein Dispersionsprofil mit dem entsprechenden Gruppengeschwindigkeitsprofil ist in Fig. 2 dargestellt. Das Dispersionsprofil ist beispielhaft aufgeführt. Der Mechanismus hängt sehr stark von den Parametern des Dispersionsprofils ab und eine Variation des Profils kann zu einer vielfachen Verstärkung des Effektes führen.

Zum Beispiel eignen sich insbesondere SOI-Wellenleiter als dispersives Medium. Die Parameter für die Dispersion und die Nichtlinearität in solch einem Medium sind um mehrere Größenordnungen höher als in optischen Fasern, und das Dispersionsprofil lässt sich durch eine Änderung der Geometrie des Mediums auf die gewünschte Profilform bringen. Dadurch kann das Verfahren zu den zur Verfügung stehenden Laserfrequenzen adaptiert werden.

Der Impulseingang 2 wird zeitlich verzögert mit den Impulsen mit unterschiedlicher Frequenz beaufschlagt. Weiterhin ist an dem Wellenleiter 1 ein Impulsausgang 3 angeordnet, an welchem die Signalimpulse und die Kontrollimpulse mit verschobenen Frequenzen abgreifbar und auswertbar sind.

Der Impulsausgang 3 kann mit mindestens einem Filter 4 verbunden sein.

Die Frequenzen der Eingangsimpulse sind unterschiedlich und sind so zu wählen, dass die Gruppengeschwindigkeiten der Impulse nahezu gleich sind.

Die Frequenz ω1_{S} des Signalimpulses liegt im anomalen Dispersionsbereich des Wellenleiters. Die Impulsbreite und Impulsamplitude des Signalimpulses sind darüber hinaus so zu wählen, dass Solitonpropagation gewährleistet ist. In diesem Ausführungsbeispiel liegt die zeitliche Breite des Eingangsimpulses bei ca. 40-fs.

Ein optisches Soliton ist ein stabiler optischer Impuls, der unverändert durch ein nichtlineares optisches Medium propagiert, ohne dabei seine zeitliche Impulsform oder sein Spektrum zu verändern. Die Bedingungen für Solitonpropagation werden in einer optischen Faser durch den Ausgleich zwischen der Impulsverbreiterung aufgrund anomaler Dispersion und der entgegenwirkenden nichtlinearen Selbstphasenmodulation verursacht.

Die möglichen Parameter für Solitonpropagation sind dabei durch die Eingangspulsparameter und der Faserparameter entsprechend P=|β₂|/(γ T₀²) gegeben. P ist dabei die Eingangsimpulsspitzenleistung und β₂ der Dispersionskoeffizient für die entsprechende Eingangsfrequenz. Der Parameter γ entspricht dem nichtlinearen Koeffizienten der Faser und T₀ der Eingangsimpulsbreite.

Der Kontrollimpuls wird entsprechend des in Fig. 2 gegebenen Dispersionsprofils in den normalen Dispersionsbereich eingekoppelt.

Die Lichtimpulsparameter des Kontrollimpulses dienen als abstimmbare Größen und sind hier variabel. Die Frequenzen müssen jedoch in einem Bereich liegen, der in der Faser zu einer ähnlichen Gruppengeschwindigkeit wie der des Signalimpulses führt. Dadurch wird die Wechselwirkungslänge vergrößert und ein "Walk-off" vermieden.

Signal- und Kontrollimpuls werden mit einer zeitlichen Verzögerung in das nichtlineare Medium eingekoppelt. Die zeitliche Verzögerung zwischen den beiden Impulsen stellt einen weiteren freien Parameter dar, der eine einfache kontinuierliche Abstimmbarkeit gewährleistet.

Entsprechend der Faserlänge ist er jedoch so zu wählen, dass beide Impulse miteinander in direkte Wechselwirkung treten können. Ist der Signalimpuls schneller als der Kontrollimpuls ist dieser zeitlich später in die Faser zu koppeln.

Eine weitere Anforderung für das Auftreten dieses physikalischen Mechanismus liegt darin, dass die Kombination aus Materialparametern und optischen Impulsparametern derart gestaltet ist, dass die Intensität des Signalimpulses zu einer starken Änderung des Brechungsindex führt. Dies lässt sich z. B. für die üblich verwendeten photonischen Kristallfasern auch durch kurze optische Impulse im sub 100-fs Bereich realisieren.

Treffen beide optische Impulse in der Faser aufeinander, führt die starke Brechungsindexänderung dazu, dass das Propagationsverhalten des Kontrollimpulses durch den Brechungsindex des Signalimpulses bestimmt wird. Durch die vergrößerte Wechselwirkungslänge ist der schwächere Kontrollimpuls nicht in der Lage, den Signalimpuls zu durchwandern, sondern wird an der Signalimpulsfront reflektiert. Dies führt zu einer Geschwindigkeitsänderung des Kontrollimpulses, und die Frequenz des Kontrollimpulses ω1_{K} verschiebt sich auf die Frequenz ω2ₖ für den entsprechenden Gruppendispersionswert.

Während der Wechselwirkung zwischen den Impulsen findet eine Energie- und Impulsübertragung statt. Der Signalimpuls erfährt somit auch eine Frequenzverschiebung von ω1_{S} auf ω2_{S}. Mit Hilfe der Materialparameter kann diese Frequenzverschiebung genutzt werden, um den starken Signalimpuls auch durch einen schwächeren Kontrollimpuls in ihren Eigenschaften zu manipulieren.

Ist die Frequenz ω1_{K}, wie in Fig. 2 dargestellt, so gewählt, dass die Gruppengeschwindigkeit des Kontrollimpulses kleiner ist als die des Signalimpulses, erfährt der Kontrollimpuls bei einer Wechselwirkung eine Frequenzverschiebung von ω1_{K} zu kleineren Frequenzen ω2_{K} und der Signalimpuls eine Verschiebung zu höheren Frequenzen ω2_{S}, wie in Fig. 2a dargestellt, und Energie wird vom Kontrollimpuls auf den Signalimpuls übertragen. Der Dispersionsparameter β₂ für die Frequenz ω2_{S} ist um einiges kleiner als für die Frequenz ω1_{S}. Dadurch stellt sich der Signalimpuls adiabatisch durch eine Pulsverformung auf ein Soliton für den neuen Dispersionsparameter ein, was zu einer zeitlichen Komprimierung des Signalpulses führt. Die Form des Ausgangsimpulses des Signals entspricht der eines fundamentalen Solitons.

Ein Eingangssignalimpuls mit der Amplitude A₁ kommt als Soliton ohne Wechselwirkung mit einem Kontrollimpuls unverändert durch den nichtlinearen Wellenleiter. Das Ausgangssignal hat somit dieselben Charakteristiken wie das Eingangssignal. Dieses Soliton mit Spitzenintensität P₁, zeitlicher Breite T₁ und Frequenz ω1_{S} lässt sich beispielsweise als Zustand "0" definieren (siehe Fig. 3).

Die Wechselwirkung mit einem Kontrollimpuls, führt entsprechend dem oben beschriebenen Verhalten zu einer Pulskomprimierung des Signalimpulses auf ein Soliton mit einer höheren Spitzenintensität P₂ und kleinerer zeitlicher Breite T₂. Dieses Soliton lässt sich als Zustand "1" definieren (siehe Fig. 3).

Das Verhältnis oder die Differenz zwischen den beiden Spitzenintensitäten kann somit das logische Signal tragen und man vermeidet es, den Schwellwert nahe des Nullpunktes zu setzen. Dies führt zu einem weiteren Vorteil, da der logische Zustand unabhängig von möglichen Verlusten bleibt.

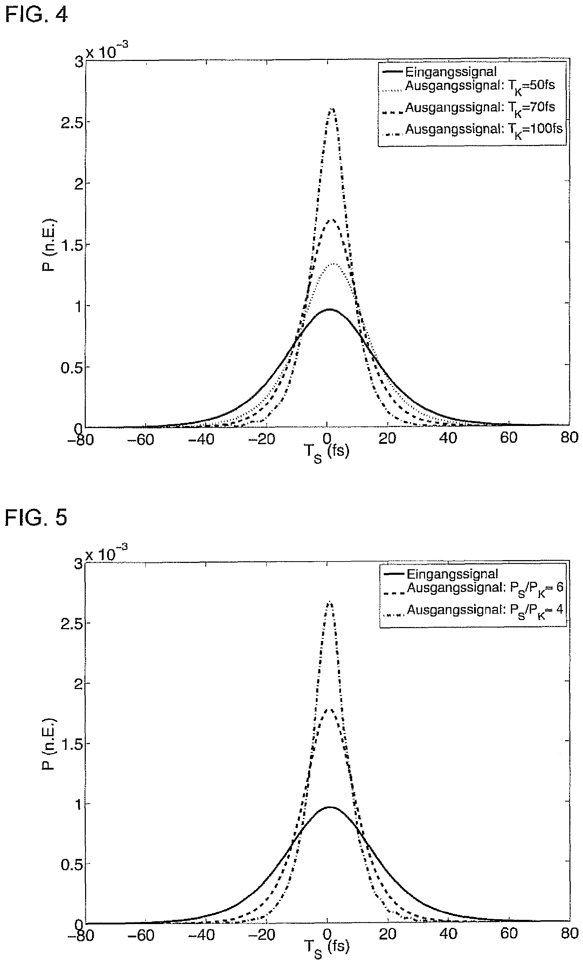

Die Frequenzverschiebung für den Signalimpuls, und somit der Komprimierungsfaktor, lassen sich über die Impulseigenschaften des Kontrollimpulses einstellen. Fig. 4 stellt dem Signal-Eingangsimpuls die Signal-Ausgangsimpulse gegenüber, die durch unterschiedliche zeitliche Breite des Kontrollimpulses erhalten werden. Je größer die zeitliche Breite des Kontrollimpulses gewählt wird, umso stärker sind die Frequenzverschiebungen. Dadurch lassen sich unterschiedliche Spitzenintensitäten erreichen, die es erlauben, nicht nur den Zustand von "0" bis "1" kontinuierlich über den Kontrollimpuls einzustellen, sondern auch Spitzenintensitäten zu erreichen, die erheblich höher liegen als für den Zustand "1".

Ein weiterer freier Parameter für den Kontrollimpuls ist durch die Spitzenintensität gegeben.

Fig. 5 stellt die Signal-Ausgangsimpulsintensitäten nach Wechselwirkung einer vier- bzw. sechsfach kleineren Spitzenintensität des Kontrollimpulses gegenüber.

Dies demonstriert eine wichtige Eigenschaft der vorliegenden Erfindung. Der Kontrollimpuls kann um ein Vielfaches schwächer als der Signalimpuls sein (siehe Punkt 2 für Hauptkriterien für einen Transistor). Die Funktionsweise eines Transistors als optisches Bauelement, das mit Hilfe eines schwächeren optischen Kontrollimpuls einen stärkeren optischen Signalimpuls schalten und kontrollieren kann, ist somit gegeben.

Weitere steuerbare Parameter zu einer gewünschten abstimmbaren Frequenzverschiebung sind die Frequenz des Kontrollimpulses und die zeitliche Verzögerung, mit der die optischen Impulse eingekoppelt werden.

Ein zusätzlicher Vorteil besteht darin, dass Energie auf den Signalimpuls übertragen werden kann.

Eingangssignal- und Ausgangssignalimpuls entsprechen stabilen fundamentalen Solitonen, so dass der unveränderte Signalimpuls im Zustand "0" oder der veränderte Signalimpuls im Zustand "1" für eine weitere Stufe verwendet werden kann (siehe Punkt 1 der Hauptkriterien für einen Transistor).

Die exakte Form eines fundamentalen Solitons ist für den Einganssignalimpuls nicht nötig. Fundamentale Solitonen stellen stabile Lösungen in der Faseroptik dar und werden während der Propagation innerhalb der Faser als Pulsform eingenommen. Dabei können die Spitzenintensitäten und Pulsbreiten über einen weiten Bereich variieren (siehe Punkt 3 der Hauptkriterien für einen Transistor). Durch die Wechselwirkung mit dem Kontrollimpuls kann auch ein zusätzlicher Regenerierungseffekt über die Energieübertragung in Kombination mit der Stabilität eines fundamentalen Solitons erreicht werden.

Die Frequenzen des Signalimpulses und des Kontrollimpulses liegen auseinander und sind sowohl am Eingang als auch am Ausgang des nichtlinearen Wellenleiters klar voneinander zu trennen (siehe Punkt 4 der Hauptkriterien für einen Transistor).

Zur abstimmbaren Kontrolle des Signalimpulses können auch hier jeweils die zeitliche Breite, die Amplitude oder die Frequenz des Kontrollimpulses herangezogen werden.

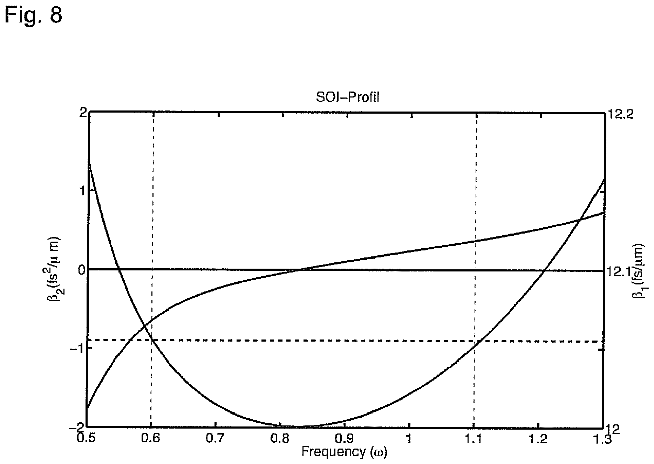

Die Transistoreigenschaft über das Kontrastverhältnis zwischen der logischen "0" und der "1" ist hier beispielhaft an der Peakintensität aufgeführt worden. Es kann jedoch auch die zeitliche Impulsdauer als auch die spektrale Breite der Solitonen herangezogen werden. Ein höheres Kontrastverhältnis lässt sich sowohl durch die Eingangsimpulsparameter einstellen als auch durch die Verwendung eines anderen Dispersionsprofils. Fig. 8 zeigt das Dispersionsprofil eines SOI-Wellenleiters, das höhere Dispersionswerte aufweist. Dadurch kann über kleinere Frequenzverschiebung eine stärkere Dispersionsänderung entlang des Profils erreicht werden, was zu einer stärken Änderung der Charakteristiken des Solitons führt.

### Beispiel 2: optischer Schalter

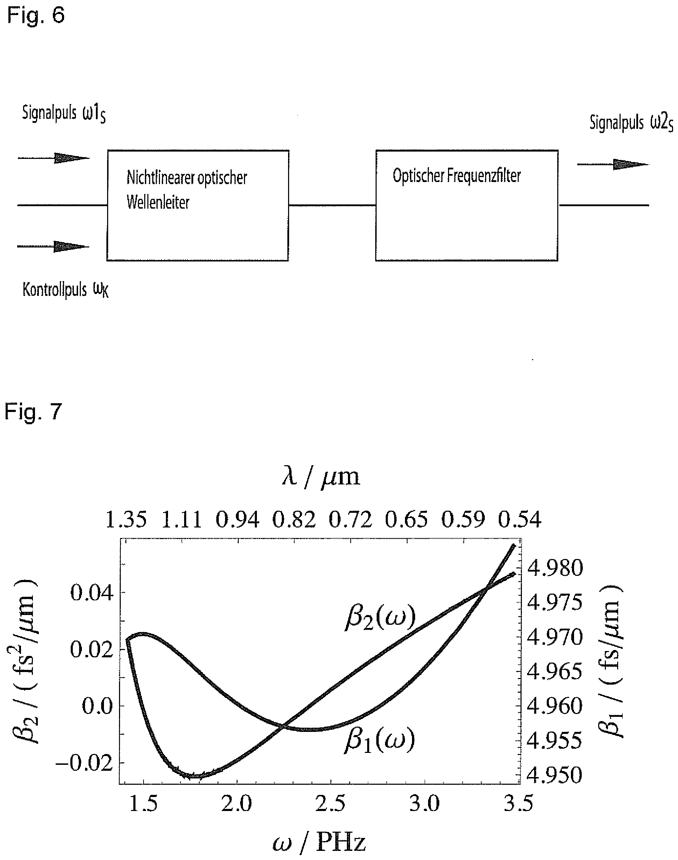

Fig. 6 stellt das Prinzip eines optischen Schalters dar. Ein mögliches Dispersionsprofil ist in Fig. 7 gegeben und entspricht dem Dispersionsprofil einer häufig verwendeten kommerziell erhältlichen Mikrostruktur-Faser (NL-PM-750).

Die Anforderung einer starken Dispersionsänderung im anomalen Bereich ist hier für ein optisches Schalten nicht nötig.

Ein Signalimpuls mit für eine Solitonpropagation gewählten Impulsparametern wird in den anomalen Dispersionsbereich mit der Frequenz ω1_{S} eingekoppelt. Der Signalpuls propagiert unverändert durch die Faser und passiert einen Filter, falls kein Kontrollimpuls vorhanden ist.

Eine Wechselwirkung mit einem Kontrollimpuls bei der Frequenz ω1ₖ führt zu einer Frequenzverschiebung auf ω2_{S} des Signalimpulses. Verwendet man einen Filter, der den Signalimpuls bei kleinster Frequenzverschiebung sperrt, erhält man die Wirkungsweise eines digitalen Schalters mit dem Zustand "0" bei Wechselwirkung mit einem Kontrollimpuls und dem Zustand "1" ohne Wechselwirkung mit einem Kontrollimpuls.

Ein frequenzabhängiger Filter (siehe Fig. 6) lässt die Verwendung als einen analogen Schalter zu. Beispielsweise sei der Signalimpuls bei seiner Eingangsfrequenz ω1_{S} vollständig durch den Filter gesperrt. Ein Kontrollimpuls verschiebt die Frequenz des Signalimpulses zu einem Bereich des Filters mit einer höheren Durchlässigkeit. Durch Abstimmen der zeitlichen Breite oder der Intensität des Kontrollimpulses kann die Frequenz des Signalimpulses in gewünschtem Maße entlang der Durchlässigkeitskennlinie des Filters verschoben werden, entsprechend der Wirkungsweise eines analogen Schalters.

Der optische Schalter kann hier sowohl für den Signalimpuls als auch für den Kontrollimpuls realisiert werden.

### Beispiel 3: optisch abstimmbarer Impulskompressor

Der optische Impulskompressor funktioniert entsprechend Beispiel 1, wobei hier die zeitliche optische Impulsdauer von Interesse ist.

Der Signalimpuls wird bei der Frequenz ω1_{S} und der Kontrollimpuls bei der Frequenz ω1_{K}, wie in Fig. 1 angegeben, eingekoppelt. Die Frequenz ω1_{K} ist so gewählt, dass die Gruppengeschwindigkeit des Kontrollimpulses kleiner ist als die des Signalimpulses.

Der Mechanismus funktioniert entsprechend der Beschreibung in Beispiel 1.

Koppelt man zuerst den Kontrollimpuls und anschließend den Signalimpuls mit einer gewissen zeitlichen Verzögerung ein, wird der Kontrollimpuls vom Signalimpuls überholt. Bei einem Zusammentreffen erfährt der Kontrollimpuls über die Energieerhaltung eine Frequenzverschiebung von ω1_{K} zu kleineren Frequenzen ω2_{K} und der Signalimpuls eine Verschiebung von zu höheren Frequenzen. Energie wird vom Kontrollimpuls auf den Signalimpuls übertragen. Der Dispersionsparameter β₂ für die Frequenz ω2_{S} ist um einiges kleiner als für die Frequenz ω1_{S}.

Stellt sich der Signalimpuls adiabatisch durch eine Pulsverformung auf ein Soliton für den neuen Dispersionsparameter ein, führt dies zu einer zeitlichen Komprimierung des Signalpulses. Der Ausgangsimpuls des Signals behält die Form eines fundamentalen Solitons.

Die Frequenzverschiebung für den Signalimpuls und somit der Komprimierungsfaktor lässt sich über die Impulseigenschaften des Kontrollimpulses abstimmen. Fig. 3 stellt den Signalimpuls den Ausgangsimpulsen gegenüber, die durch unterschiedliche zeitliche Breite des Kontrollimpulses erhalten werden. Je größer man die zeitliche Breite des Kontrollimpulses wählt umso stärker sind die Frequenzverschiebungen.

Der Komprimierungsmechanismus verhält sich ähnlich wie Impulskompression in einer "Dispersion-decreasing Fiber (DDF)", in der sich der Wert der Dispersion entlang der Propagationsachse verringert. Der Eingangsimpuls verformt sich während der Propagation entlang der Faser durch Anpassung an einen veränderten Dispersionsparameter adiabatisch zu einem Soliton.

Hier jedoch bleibt das Dispersionsprofil der Faser gleich. Die Änderung des Dispersionswertes für das Soliton wird durch eine Frequenzverschiebung durch Wechselwirkung mit einem Kontrollpuls verursacht und lässt sich somit steuern. Zusätzlich wird Energie auf den Signalimpuls übertragen.

Ein weiterer freier Parameter für den Kontrollimpuls ist durch die Peakintensität gegeben. Fig. 4 stellt den Signaleingangsimpuls den Ausgangssignalimpulsen gegenüber, die durch unterschiedliche Peakintensität des Kontrollimpulses erhalten werden.

Weitere steuerbare Parameter zu einer gewünschten abstimmbaren Frequenzverschiebung sind die Frequenz des Kontrollimpulses und der zeitliche Delay zwischen den Impulsen.

### Beispiel 4: Optisch abstimmbarer Wellenlängenkonverter:

Das Funktionsprinzip ist auch hier dasselbe wie in Beispiel 1 in Fig. 1, wobei jedoch die Frequenzverschiebung direkt ausgeschöpft wird. Durch geeignete Eingangsfrequenzen lassen sich die Frequenzen sowohl des Signalimpulses als auch für den Kontrollimpuls jeweils zu kürzeren oder höheren Frequenzen verschieben.

Bei Eingangsfrequenzen für Kontrollimpuls und Signalimpuls entsprechend Beispiel 1 führt das zu einer starken Frequenzverschiebung des Kontrollimpulses zu kleineren Frequenzen und einer schwachen Frequenzverschiebung des Signalimpulses zu höheren Frequenzen.

Eine weitere mögliche Variante für eine Frequenzkonversion ist folgende:
Die Eingangsfrequenzen liegen für den Signalimpuls bei ω1_{S} und für den Kontrollimpuls bei ω1_{K} wie in Fig. 7 dargestellt. Dadurch propagiert der Kontrollimpuls mit einer höheren Geschwindigkeit in der Faser als der Signalimpuls. Der Signalimpuls muss daher zuerst eingekoppelt werden und der Kontrollimpuls folgt mit einer zeitlichen Verzögerung.

Der Kontrollimpuls stößt dadurch zu dem Signalimpuls auf. Während des Zusammenstoßes wird die Frequenz des Signalimpulses zu kleineren Frequenzen verschoben und die Frequenz des Kontrollimpulses zu höheren Frequenzen. Energie wird vom Signalimpuls auf den Kontrollimpuls übertragen.

Die Frequenzverschiebung lässt sich über die Impulsparameter abstimmen. Dies erlaubt eine kontinuierliche Abstimmung zu höheren Frequenzen.

Der Vorteil dieser Methode liegt darin, dass für den Kontrollimpuls eine sehr hohe Konvertierungseffizienz erreicht werden kann.

Mit unterschiedlichen Eingangsfrequenzen lassen sich mit derselben Faser unterschiedliche neue Ausgangsfrequenzen erreichen, so dass mit demselben Bauelement eine höhere Flexibilität erreicht wird.

Die Verwendung unterschiedlicher Dispersionsprofile erweitert den möglichen erreichbaren Frequenzbereich. Für geeignete Dispersionsprofile und Eingangsimpulse können beispielsweise Frequenzen im stark ultravioletten Bereich erzeugt werden.

Dadurch, dass Energie auf die neue Frequenz übertragen wird, unterscheidet sich das hier vorgestellte Verfahren grundlegend von Verfahren, die höhere Harmonische zur Frequenzerzeugung verwenden.

### Beispiel 5: Optischer Transistor mit Solitonen unterschiedlicher Frequenz

Das Funktionsprinzip ist auch hier dasselbe wie in Beispiel 1 in Fig. 1, wobei jedoch der dispersive nichtlineare Wellenleiter ein Dispersionsprofil mit mindestens 2 Nullstellen aufweist. Dadurch liegen zwei durch einen normalen Dispersionsbereich getrennte anomale Dispersionsbereiche vor. Die Eingangsfrequenzen sind hier jetzt so zu wählen, dass sowohl Signalimpuls als auch Kontrollimpuls im anomalen Dispersionsbereich liegen. Dies ermöglicht die Propagation zweier Solitonen mit nahezu gleichen Gruppengeschwindigkeiten. Durch die Einkopplung beider optischer Impulse mit einer zeitlichen Verzögerung wird in der Faser bei einer entsprechenden Länge ein stoß-ähnlicher Prozess bzw. ein Reflektionsprozess zwischen beiden Solitonen herbeigeführt. Das Manipulationsprinzip ist dasselbe wie zwischen einer dispersiven Welle und einem Soliton. Der Vorteil dieser Methode im Vergleich zu Beispiel 1 liegt darin, dass beide optischen Impulse jeweils als Signalimpuls oder als Kontrollimpuls betrachtet werden können, und beide Impulse am Ausgang wieder verwertbar sind.

### Beispiel 6: Erzeugung extrem breitbandiger optischer Spektren (Superkontinua) mit einem intensiven Kontrollimpuls

Die Erzeugung von Superkontinua funktioniert entsprechend den Beispielen 1 und 4, wobei hier die Intensität des Kontrollimpulses vergleichbar ist mit der Intensität des Signalimpulses. Dadurch wird der intensitätsabhängige Brechungsindex durch beide Impulse verändert und somit breitbandige Spektren angeregt.

Es existieren grundsätzlich wieder zwei unterschiedliche Kombinationsmöglichkeiten für die Eingangsimpulse ähnlich wie in Beispiel 4. Entspricht die Frequenzkombination der Eingangsfrequenzen in Beispiel 1, so kann nahezu das ganze Spektrum zwischen beiden Eingangsfrequenzen angeregt werden. Ein Vorteil dieser Methode liegt darin, dass man über die Eingangsfrequenzen eine sehr gute Kontrolle über die Bandbreite erhält. Die Intensität des Superkontinuums kann durch die Eingangsimpulsparameter eingestellt werden. Kohärenzstörende Mechanismen wie die Modulationsinstabilität können mit dieser Methode vermieden werden.

Bei einem Einsatz der zweiten möglichen inversen Frequenzkombination aus Beispiel 4 werden getrennte breitbandige Spektren erzeugt. Hier liegt der Vorteil darin, dass Spektren in Bereichen im weiten infraroten oder ultravioletten Bereich erzeugt werden können, die nicht direkt durch das Lasersystem erreicht werden.

### Beispiel 7: Erzeugung von Superkontinua mit einem Zug von dispersiven Wellen

Das Verfahren funktioniert wie in Beispiel 7, wobei statt einer intensiven dispersiven Welle ein Zug von dispersiven Wellen mit geringeren Intensitäten eingekoppelt wird.

Die kaskadierte Reflektion der dispersiven Wellen mit dem Soliton führt im Spektrum zu einer sukzessiven Anregung neuer Frequenzen. Die Anzahl der dispersiven Wellen kann zur Abstimmung der Bandbreite verwendet werden. Weitere abstimmbare Parameter sind die zeitlichen Abstände zwischen den dispersiven Wellen und ihre Intensitäten. In einem geringen Maße können auch die Eingangsfrequenzen der dispersiven Wellen variiert werden.

Die Erfindung ist nicht beschränkt auf die hier dargestellten Ausführungsbeispiele. Vielmehr ist es möglich, weitere Ausführungsvarianten zu realisieren, ohne den Rahmen der Erfindung gemäß den unabhängigen Ansprüchen 1 und 6 zu verlassen.

## Patentansprüche

1. Verfahren zur rein optischen Manipulation von optischen Impulsen in einem dispersiven nichtlinearen optischen Wellenleiter, wobei zwischen den optischen Impulsen eine Wechselwirkung induziert wird, wobei
- in dem dispersiven nichtlinearen optischen Wellenleiter mit einem Dispersionsprofil mit mindestens einer Nullstelle ein Signalimpuls mit einer Frequenz im anomalen Dispersionsbereich des Wellenleiters und ein Kontrollimpuls mit unterschiedlicher Frequenz gegenüber der Frequenz des Signalimpulses und mit einer zeitlichen Verzögerung zueinander eingekoppelt werden;
- die Impulsbreite und Impulsamplitude des Signalpulses so gewählt werden, dass Solitonenpropagation gewährleistet ist;
- die Frequenzen von Signalimpuls und Kontrollimpuls so eingestellt werden, dass die Gruppengeschwindigkeiten der Impulse gleich oder nahezu gleich sind; und
- Signal- und Kontrollimpuls in Wechselwirkung miteinander gebracht werden, wodurch eine Brechungsindexänderung induziert wird, welche über eine Kreuzphasenmodulation eine Impuls- und Energieübertragung und daraus folgend eine gegenseitige Frequenzverschiebung der Impulse realisiert derart, dass die Frequenzverschiebung für den Signalimpuls über die Impulseigenschaften des Kontrollimpulses eingestellt und ausgewertet wird, und die Wechselwirkung zwischen Signal- und Kontrollimpuls so einstellbar ist, dass eine Frequenzverschiebung des Kontrollimpulses zu kleineren Frequenzen und eine Frequenzverschiebung des Signalimpulses zu höheren Frequenzen bzw. eine Frequenzverschiebung des Signalimpulses zu kleineren Frequenzen und eine Frequenzverschiebung des Kontrollpulses zu höheren Frequenzen erfolgt, wobei der Signalimpuls dadurch verändert wird, dass die Frequenzverschiebung der Impulse mit Hilfe frequenzabhängiger Materialparameter ausgenutzt wird.

2. Verfahren nach Anspruch 1, **dadurch gekennzeichnet, dass** die Frequenzverschiebung für den Signalimpuls über die Impulseigenschaften des Kontrollimpulses eingestellt wird.

3. Verfahren nach einem der voranstehenden Ansprüche, **dadurch gekennzeichnet, dass** weitere abstimmbare und/oder auswertbare Lichtimpulsparameter die Impulsbreite, die Impulsamplitude, die Spitzenintensität, die Impulsform, die Impulsdauer und der zeitliche Delay zwischen den Impulsen sind.

4. Verfahren nach einem der voranstehenden Ansprüche, **dadurch gekennzeichnet, dass** ein starker Signalimpuls durch einen schwächeren Kontrollimpuls manipuliert wird.

5. Verfahren nach einem der voranstehenden Ansprüche, **dadurch gekennzeichnet, dass** die Eingangs- und Ausgangssignalimpulse Solitonen sind.

6. Anordnung zur rein optischen Manipulation von optischen Impulsen in einem dispersiven nichtlinearen optischen Wellenleiter, wobei der dispersive nichtlineare optische Wellenleiter (1) ein Dispersionsprofil mit mindestens einer Nullstelle aufweist und mindestens ein Impulseingang (2) für einen Signalimpuls mit einer Frequenz im anomalen Dispersionsbereich des Wellenleiters (1) und einen Kontrollimpuls mit einer unterschiedlichen Frequenz gegenüber der Frequenz des Signalimpulses angeordnet ist, wobei der Impulseingang (2) zeitlich verzögert mit dem Signalimpuls und dem Kontrollimpuls beaufschlagt wird, wobei die Impulsbreite und Impulsamplitude des Signalimpulses so gewählt sind, dass Solitonenpropagation gewährleistet ist;
die Frequenzen von Signalimpuls und Kontrollimpuls so einstellbar sind, dass die Gruppengeschwindigkeiten der Impulse gleich oder nahezu gleich sind; und
weiterhin ein Impulsausgang (3) angeordnet ist, an welchem die Signalimpulse und die Kontrollimpulse mit einer Frequenzverschiebung des Kontrollimpulses zu kleineren Frequenzen und einer Frequenzverschiebung des Signalimpulses zu höheren Frequenzen bzw. einer Frequenzverschiebung des Signalimpulses zu kleineren Frequenzen und einer Frequenzverschiebung des Kontrollpulses zu höheren Frequenzen abgreifbar und auswertbar sind nachdem Signal- und Kontrollimpuls in Wechselwirkung miteinander gebracht wurden und hierdurch eine Brechungsindexänderung induziert wurde, welche über eine Kreuzphasenmodulation eine Impuls- und Energieübertragung und daraus folgend eine gegenseitige Frequenzverschiebung der Impulse realisierte, wobei der Signalimpuls dadurch verändert wurde, dass die Frequenzverschiebung der Impulse mit Hilfe frequenzabhängiger Materialparameter ausgenutzt wurde.

7. Anordnung nach Anspruch 6, **dadurch gekennzeichnet, dass** der Impulsausgang (3) mit mindestens einem Filter (4) verbunden ist.

8. Anordnung nach Anspruch 6, **dadurch gekennzeichnet, dass** der dispersive nichtlineare optische Wellenleiter (1) eine optische Faser, eine photonische Kristallfaser oder ein SOI('Silicon on Insulator')-Wellenleiter ist.

9. Verwendung einer Anordnung gemäß einem der voranstehenden Ansprüche 6 bis 8 zur Realisierung eines optischen Transistors oder eines optischen Impulskompressors oder eines optischen Wellenlängenkonverters oder zur Erzeugung von Superkontinua.

## Claims

1. A method for the all-optical manipulation of optical pulses in a dispersive non-linear optical waveguide, wherein an interaction is induced between the optical pulses, wherein
- a signal pulse having a frequency in the abnormal dispersion range of the waveguide and a control pulse having a different frequency with respect to the frequency of the signal pulse and with a time delay are coupled into one another in the dispersive non-linear optical waveguide having a dispersion profile with at least one zero point;
- the pulse width and pulse amplitude of the signal pulse are selected such that soliton propagation is ensured;
- the frequencies of the signal pulse and control pulse are set such that the group speeds of the pulses are the same or virtually the same; and
- the signal pulse and the control pulse are caused to interact, as a result of which a change in the refractive index is induced, which implements a pulse and energy transmission using a cross-phase modulation and, consequently, a reciprocal frequency shift in the pulses in such a manner that the frequency shift for the signal pulse is set and evaluated using the pulse properties of the control pulse, and the interaction between the signal and the control pulse can be set so that a frequency shift of the control pulse takes place at lower frequencies and a frequency shift of the signal pulse takes place at higher frequencies, or respectively a frequency shift of the signal pulse takes place at lower frequencies and a frequency shift of the control pulse takes place at higher frequencies, wherein the signal pulse is changed in that the frequency shift in the pulses is exploited with the aid of frequency-dependent material parameters.

2. The method according to Claim 1, **characterized in that** the frequency shift for the signal pulse is set using the pulse properties of the control pulse.

3. The method according to any one of the preceding claims, **characterized in that** additional light pulse parameters which can be adjusted and/or evaluated are the pulse width, the pulse amplitude, the peak intensity, the pulse form, the pulse duration and the time delay between the pulses.

4. The method according to any one of the preceding claims, **characterized in that** a strong signal pulse is manipulated by a weaker control pulse.

5. The method according to any one of the preceding claims, **characterized in that** the input and output signal pulses are solitons.

6. An arrangement for the all-optical manipulation of optical pulses in a dispersive non-linear optical waveguide, wherein
the dispersive non-linear optical waveguide (1) has a dispersion profile with at least one zero point, and at least one pulse input (2) for a signal pulse having a frequency in the abnormal dispersion range of the waveguide (1) and for a control pulse having a different frequency with respect to the frequency of the signal pulse is arranged, wherein the signal pulse and the control pulse are applied to the pulse input (2) with a time delay, wherein the pulse width and pulse amplitude of the signal pulse are selected such that soliton propagation is ensured;
the frequencies of the signal pulse and the control pulse can be set such that the group speeds of the pulses are the same or virtually the same; and furthermore a pulse output (3) is arranged, at which the signal pulses and the control pulses having a frequency shift of the control pulse at lower frequencies and a frequency shift of the signal pulse at higher frequencies, or respectively a frequency shift of the signal pulse at lower frequencies and a frequency shift of the control pulse at higher frequencies can be tapped off and evaluated after the signal and the control pulse have been caused to interact and, as a result, a change in the refractive index has been induced, which implemented a pulse and energy transmission using a cross-phase modulation and, consequently, a reciprocal frequency shift in the pulses, wherein the signal pulse has been changed in that the frequency shift of the pulses has been exploited with the aid of frequency-dependent material parameters.

7. The arrangement according to Claim 6, **characterized in that** the pulse output (3) is connected to at least one filter (4).

8. The arrangement according to Claim 6, **characterized in that** the dispersive non-linear optical waveguide (1) is an optical fiber, a photonic crystal fiber or an SOI ('Silicon on Insulator') waveguide.

9. Use of an arrangement according to any one of the preceding Claims 6 to 8, in order to implement an optical transistor or an optical pulse compressor or an optical wavelength converter, or in order to produce supercontinua.

## Revendications

1. Procédé pour la manipulation tout optique d'impulsions optiques dans un guide d'onde optique non linéaire dispersif, une interaction entre les impulsions optiques étant induite,
- une impulsion de signal avec une fréquence dans la plage de dispersion anomale du guide d'onde et une impulsion de contrôle avec fréquence différente par rapport à la fréquence de l'impulsion de signal, et avec un délai temporel entre elles, sont couplées dans le guide d'onde optique non linéaire dispersif, avec un profil de dispersion avec au moins un zéro ;
- la largeur d'impulsion et l'amplitude d'impulsion de l'impulsion de signal étant sélectionnées de telle sorte que la propagation des solitons est garantie ;
- les fréquences de l'impulsion de signal et de l'impulsion de contrôle étant réglées de telle sorte que les vitesses de groupes des impulsions sont égales ou quasiment égales ; et
- l'impulsion de signal et l'impulsion de contrôle étant mises en interaction l'une avec l'autre, une modification d'indice de réfraction étant induite, laquelle réalise, par une modulation de phase croisée, un transfert d'impulsion et d'énergie et, en découlant, un décalage de fréquence réciproque des impulsions de telle sorte que le décalage de fréquence pour l'impulsion de signal est réglé et analysé par les propriétés d'impulsion de l'impulsion de contrôle, et l'interaction entre l'impulsion de signal et l'impulsion de contrôle étant réglable de telle sorte qu'un décalage de fréquence de l'impulsion de contrôle vers des fréquences plus basses et un décalage de fréquence de l'impulsion de signal vers des fréquences plus élevées ou un décalage de fréquence de l'impulsion de signal vers des fréquences plus basses et un décalage de fréquence de l'impulsion de contrôle vers des fréquences plus élevées sont effectués, l'impulsion de signal étant modifiée par le fait que le décalage de fréquence des impulsions est exploité à l'aide de paramètres de matériau dépendant de la fréquence.

2. Procédé selon la revendication 1, **caractérisé en ce que** le décalage de fréquence pour l'impulsion de signal est réglé par les propriétés d'impulsion de l'impulsion de contrôle.

3. Procédé selon l'une quelconque des revendications précédentes, **caractérisé en ce que** d'autres paramètres d'impulsion lumineuse pouvant être accordés et/ou analysés sont la largeur d'impulsion, l'amplitude d'impulsion, l'intensité de pointe, la forme d'impulsion, la durée d'impulsion et le délai temporel entre les impulsions.

4. Procédé selon l'une quelconque des revendications précédentes, **caractérisé en ce qu'**une impulsion de signal plus forte est manipulée par une impulsion de contrôle plus faible.

5. Procédé selon l'une des revendications précédentes, **caractérisé en ce que** les impulsions d'entrée et de sortie sont des solitons.

6. Procédé pour la manipulation tout optique d'impulsions optiques dans un guide d'onde optique non linéaire dispersif,
le guide d'onde optique non linéaire dispersif (1) présentant un profil de dispersion avec au moins un zéro et au moins une entrée d'impulsions (2) pour une impulsion de signal avec une fréquence dans la plage de dispersion anomale du guide d'onde (1) et pour une impulsion de contrôle avec une fréquence différente par rapport à la fréquence de l'impulsion de signal étant fournie, l'entrée d'impulsions (2) étant alimentée par l'impulsion de signal et par l'impulsion de contrôle de façon retardée temporellement,
la largeur d'impulsion et l'amplitude d'impulsion de l'impulsion de signal étant sélectionnées de telle sorte que la propagation des solitons est garantie ;
les fréquences de l'impulsion de signal et de l'impulsion de contrôle étant réglables de telle sorte que les vitesses de groupes des impulsions sont égales ou quasiment égales ; et
une sortie d'impulsions (3) étant fournie, à laquelle les impulsions de signal et les impulsions de contrôle peuvent être prélevées et analysées, avec un décalage de fréquence de l'impulsion de contrôle vers des fréquences plus basses et un décalage de fréquence de l'impulsion de signal vers des fréquences plus élevées ou un décalage de fréquence de l'impulsion de signal vers des fréquences plus basses et un décalage de fréquence de l'impulsion de contrôle vers des fréquences plus élevées, après que les impulsions de signal et de contrôle ont été mises en interaction l'une avec l'autre et que par cela une modification d'indice de réfraction a été induite, laquelle réalise, par une modulation de phase croisée, un transfert d'impulsion et d'énergie et, en découlant, un décalage de fréquence réciproque des impulsions, l'impulsion de signal ayant été modifiée par cela que le décalage de fréquence des impulsions a été exploité à l'aide de paramètres de matériau dépendant de la fréquence.

7. Arrangement selon la revendication 6, **caractérisé en ce que** la sortie d'impulsions (3) est reliée à au moins un filtre (4).

8. Arrangement selon la revendication 6, **caractérisé en ce que** le guide d'onde optique non linéaire dispersif (1) est une fibre optique, une fibre cristalline photonique ou un guide d'onde SOI (« silicium sur isolant »).

9. Utilisation d'un arrangement selon l'une quelconque des revendications précédentes 6 à 8 pour la réalisation d'un transistor optique ou d'un compresseur d'impulsions optique ou d'un convertisseur de longueur d'onde optique ou pour la génération de supercontinuums.
